# EUROPÄISCHE PATENTSCHRIFT

(11) **EP 3 275 702 B1**
(45) Veröffentlichungstag und Bekanntmachung des Hinweises auf die Patenterteilung: **30.10.2019**
(21) Anmeldenummer: 17183181.1
(22) Anmeldetag: 26.07.2017
(51) Int. Cl.: B60C 23/04

(54) **BEFESTIGUNGSVORRICHTUNG ZUM BEFESTIGEN EINES MESSSENSORS, INSBESONDERE REIFENDRUCKSENSORS, UND VERFAHREN ZUM MONTIEREN EINES MESSSENSORS**
FASTENING DEVICE FOR FASTENING A MEASUREMENT SENSOR, IN PARTICULAR TIRE PRESSURE SENSOR, AND METHOD FOR MOUNTING A MEASUREMENT SENSOR
DISPOSITIF DE FIXATION D'UN CAPTEUR DE MESURE, EN PARTICULIER CAPTEUR DE PRESSION DE PNEU ET PROCÉDÉ DE MONTAGE D'UN CAPTEUR DE MESURE

(30) Priorität: 29.07.2016 DE 102016214092
(43) Veröffentlichungstag der Anmeldung: 31.01.2018
(73) Patentinhaber: Alligator Ventilfabrik GmbH, 89537 Giengen (DE)
(72) Erfinder: Markert, Christian, 89542 Herbrechtingen (DE)
(74) Vertreter: Dr. Weitzel & Partner

(56) Entgegenhaltungen:
- WO-A1-2015/055479
- DE-A1- 2 420 220
- US-A- 5 798 689
- US-A1- 2005 242 937

## Beschreibung

Die vorliegende Erfindung betrifft eine Befestigungsvorrichtung zum Befestigen eines Messsensors, insbesondere Reifendrucksensors innerhalb eines Reifenhohlraumes gemäß dem Oberbegriff von Anspruch 1, sowie ein Verfahren zum Montieren eines Messsensors an einer Fahrzeugfelge.

Reifendrucksensoren werden innerhalb des Reifenhohlraumes am Reifen oder an einer Fahrzeugfelge befestigt, um im Betrieb des Fahrzeugs den Luftdruck im Reifen bzw. Reifenhohlraum fortlaufend oder in Intervallen zu erfassen. Der mit dem Reifendrucksensor erfasste Luftdruck wird mittels einer im Reifendrucksensor integrierten Sendeeinrichtung an einen Empfänger im Fahrzeug gesendet und ausgewertet, sodass bei einem unzulässigen Druckabfall eine Warnmeldung ausgegeben werden kann.

Herkömmlich erfolgt eine Befestigung eines entsprechenden Reifendrucksensors an der Felge entweder durch einen mechanischen, vorteilhaft gelenkigen Anschluss des Reifendrucksensors am inneren Ende des Reifenventils. Nachteilig ist, dass hierfür Sonderkonstruktionen der Ventile notwendig sind und aufgrund der Positionierung außerhalb des so genannten Tiefbetts der Felge die Gefahr besteht, dass der Reifendrucksensor beim Ab- oder Aufziehen des Reifens von der oder auf die Felge beschädigt wird. Ein Beispiel für einen solchen am Reifenventil befestigten Reifendrucksensor wird in der EP 0 751 017 A2 offenbart.

DE 10 2006 038 059 A9 beschreibt die Befestigung eines Reifendrucksensors an einer Kraftfahrzeugfelge mittels eines Klebestreifens. Hierfür wird ein Sockel mittels des Klebestreifens von außen im Tiefbett der Felge angeklebt. Auf dem Sockel kann dann der Reifendrucksensor befestigt werden. Zur Sicherung kann ein Verzurrgurt über der Felge durch den Sockel geführt werden, der mit einem Gurtschloss, das als Einweg- oder Mehrwegartikel ausgeführt sein kann, über dem Umfang der Felge verschlossen ist. Als Gurtschloss kommt beispielsweise ein Crimpschloss oder ein Versenkschloss oder auch ein Schneckengetriebeverschluss in Betracht. Der Klebestreifen ist in der Regel ein doppelseitiges Klebeband. Somit erfolgt die primäre Befestigung des Reifendrucksensors mit dem Klebeband, was zuverlässig verhindert, dass sich der Reifendrucksensor auf der Felge verschiebt. Starke Fliehkräfte, welche den Sockel vom Klebeband oder das Klebeband von der Felge lösen könnten, werden durch den Gurt kompensiert.

Einen hiervon abweichenden Ansatz beschreibt die DE 10 2010 037 597 A1. Gemäß der dort dargestellten Befestigungsvorrichtung zum Befestigen eines Reifenmoduls, insbesondere Luftdrucksensors, für Reifen soll vermieden werden, dass das Reifenmodul an der Fahrzeugfelge anliegt. Vielmehr soll sich das Reifenmodul frei im Inneren des Reifenhohlraums positionieren, um die Qualität der gemessenen Temperatur der Luft im Reifenhohlraum dadurch zu verbessern, dass die gemessene Temperatur nicht durch die Temperatur der Fahrzeugfelge beeinflusst wird. Das Modul soll wärmetechnisch sowohl vom Reifen als auch von der Fahrzeugfelge abgekoppelt sein. Hierfür wird, ausgehend von Ansätzen, bei denen das Reifenmodul ohne Befestigung im Reifenhohlraum angeordnet ist, vorgeschlagen, das Reifenmodul frei beweglich an einem bandartigen Haltemittel anzuordnen, wobei das bandartige Haltemittel im Wesentlichen koaxial an der Fahrzeugfelge im Reifenhohlraum angeordnet ist, wodurch das Reifenmodul bei Rotation des Fahrzeugreifens zur Reifeninnenseite und von der äußeren Umfangsseite der Fahrzeugfelge beabstandet ist. Demgemäß wird das Reifenmodul weder an der Felge noch auf der Reifeninnenseite befestigt, beispielsweise über einen entsprechenden Klebeprozess. Das bandartige Haltemittel wird lose um die Fahrzeugfelge geschlungen und lose an ihr befestigt. Um ein abriebbeständiges, hochfestes, temperaturbeständiges und luftdurchlässiges Haltemittel zu erreichen, kann dieses aus einem Kunstfasermaterial bestehen. Die einander gegenüberliegenden Enden des bandartigen Haltemittels können bei der Montage an der Fahrzeugfelge mit einem Klettverschluss verbunden werden und das Reifenmodul kann in einer verschließbaren Tasche am bandartigen Haltemittel angeordnet sein.

US 2005/0242937 A1 offenbart ein Gummiband oder einen Gummiring zum Befestigen eines Messsensors.

US 5 798 689 A beschreibt ein elastisches Band zum Befestigen eines Reifendrucksensors, wobei das Band mit Haken verschlossen wird.

DE 100 07 375 C2 betrifft einen Felgenschlauch aus textilem Fadenmaterial zur Befestigung eines schallschluckenden Körpers. Der schallschluckende Körper wird dabei durch den Schlauch selbst gebildet.

DE 94 11 270 U1 offenbart einen Bausatz zum Befestigen, Führen und Fixieren von Gegenständen, vorzugsweise von elektrischen Leitern mit einem schrumpffähigen Kunststoffband.

DE 93 12 731 U1 offenbart eine Schrumpfschlauch.

Zum weiteren Stand der Technik wir verwiesen auf DE 195 29 289 A1, DE 10 2013 221 225 A1 und DE 602 04 862 T2.

DE 24 20 220 A1 offenbart ein Verfahren zum Aufvulkanisieren eines vorvulkanisierten Laufstreifens von außen auf einen Fahrzeugreifen.

Die vorliegende Erfindung betrifft ausschließlich eine Befestigungsvorrichtung zum Befestigen eines Messdrucksensors innerhalb eines Reifenhohlraums an einer Fahrzeugfelge, bei welchem der Messdrucksensor, insbesondere Reifendruckmesser fest an der Oberfläche der Fahrzeugfelge verspannt wird, da bei einer optional vorgesehenen Temperaturmessung gerade die Felgentemperatur mit berücksichtigt werden soll. Gegenüber dem Stand der Technik mit Crimp- Versenk- oder Schneckengetriebegurtschlössern und mit in der Regel aus Metall hergestellten Gurtbändern, wobei die primäre Befestigung des Reifendrucksensors durch Kleben an der Felge erfolgt, soll die Montage jedoch schneller und komfortabler sowie felgenschonender erfolgen können und besonders große Durchmesserbereiche verschiedener Felgen sollen mit einer einzigen Befestigungsvorrichtung abgedeckt werden können. Zugleich sollen die eingangs genannten Nachteile, die bei Befestigungen von Reifendrucksensoren an Ventilen vorherrschen, vermieden werden.

Der vorliegenden Erfindung liegt daher die Aufgabe zugrunde, eine Befestigungsvorrichtung zum Befestigen eines Messsensors, insbesondere Reifendrucksensors innerhalb eines Reifenhohlraumes an einer Fahrzeugfelge anzugeben, die an Felgen verschiedener Felgendurchmesser und Gestaltungen universell verwendbar ist und sowohl bei der Erstinstallation durch Fahrzeughersteller als auch beim Nachrüsten in Werkstätten komfortabel verwendet werden kann. Ferner soll ein Montageverfahren für eine solche Befestigungsvorrichtung angegeben werden, mit welchem eine besonders komfortable Montage möglich ist.

Die erfindungsgemäße Aufgabe wird durch eine Befestigungsvorrichtung mit den Merkmalen von Anspruch 1 und ein Verfahren mit den Merkmalen von Anspruch 11 gelöst. In den abhängigen Ansprüchen sind vorteilhafte und besonders zweckmäßige Ausgestaltungen der Erfindung angegeben.

Eine erfindungsgemäße Befestigungsvorrichtung zum Befestigen eines Messsensors, insbesondere Reifendrucksensors innerhalb eines Reifenhohlraumes an einer Fahrzeugfelge, insbesondere Nutzkraftfahrzeugfelge beispielsweise für einen LKW, umfasst einen bandförmigen Spanngurt, der eine Aufnahmeeinrichtung für den Messsensor oder Reifendrucksensor trägt. Der Spanngurt und die Aufnahmeeinrichtung sind zum ortsfesten Halten und Verspannen des Sensors an der Oberfläche der Fahrzeugfelge ausgeführt. Insbesondere ist keine weitere Befestigungsvorrichtung wie Klebestreifen oder dergleichen erforderlich, sondern der Sensor wird allein durch den Spanngurt an der Felge gehalten.

Erfindungsgemäß ist der Spanngurt aus einem unter Wärmezufuhr schrumpfenden Material hergestellt, derart, dass sich der Spanngurt unter Wärmezufuhr in seiner Länge verkürzt. Die Länge bezieht sich dabei auf die Umschlingungsrichtung des bandförmigen Spanngurtes, die ein Vielfaches seiner senkrecht hierzu ausgerichteten Breite beziehungsweise seiner ebenfalls senkrecht hierzu ausgerichteten Dicke beträgt. Die Umschlingungsrichtung ist jene, in welcher der Spanngurt um die Fahrzeugfelge geschlungen wird, also die Umfangsrichtung der Fahrzeugfelge.

Das unter Wärmezufuhr schrumpfende Material wird bleibend geschrumpft, sodass die Längenverkürzung des Spanngurtes ebenfalls bleibend ist. Somit ist es möglich, den Spanngurt zunächst vergleichsweise lose um die Fahrzeugfelge, insbesondere Nutzkraftfahrzeugfelge, zu schlingen, und erst anschließend durch Wärmezufuhr die Schrumpfung des Materials des Spanngurtes und damit die Längenverkürzung des Spanngurtes auszulösen, sodass sich der Spanngurt von außen eng an die Felge anlegt.

Das Material des Spanngurtes weist bevorzugt zumindest über der Breite des Spanngurtes einen homogenen Aufbau auf. Jedoch kann auch das Material des gesamten Spanngurtes einen homogenen Aufbau aufweisen. Insbesondere ist ein Flächengewicht und/oder eine Dichte des Spanngurtes konstant. Demnach ist der Spanngurt, wenn er aus einem textilen Material hergestellt ist, über seiner Breite oder insgesamt gleichmäßig beziehungsweise gleichförmig gewebt, gewirkt und/oder gestrickt, ohne dass Zonen mit einer anderen Struktur oder einer anderen Zusammensetzung als jene, die in benachbarten Bereichen vorgesehen ist, vorhanden sind.

Gemäß einer Ausführungsform eines entsprechenden erfindungsgemäßen Montageverfahrens erfolgt die Wärmezufuhr zu dem Spanngurt und damit der Wärmeeintrag in das schrumpfende Material, der die Schrumpfung auslöst, zumindest auch während des Betriebs der Fahrzeugfelge an beziehungsweise in einem Fahrzeug. Wenn beispielsweise die Fahrzeugfelge durch Bremsen mit einer im Bereich der Fahrzeugfelge angeordneten Bremseinrichtung, in der Regel Scheibenbremse, erhitzt wird, so wird diese Wärme aus der Fahrzeugfelge in den Spanngurt übertragen, wobei sich der Spanngurt dadurch automatisch noch enger an die Felge anlegt, das heißt auf diese aufgeschrumpft wird.

Selbstverständlich ist es möglich, schon bei der Montage der Befestigungsvorrichtung beziehungsweise des Spanngurtes auf der Fahrzeugfelge durch Wärmezufuhr eine Schrumpfung auszulösen, damit der Spanngurt mehr oder minder eng auf die Felge aufgeschrumpft wird. Beispielsweise kann die Wärmezufuhr mit einem Heißluftgebläse oder in einem Ofen erfolgen. Auch das Anlegen einer elektrischen Spannung an die Felge, um diese zu erhitzen ist prinzipiell möglich. Andere Verfahren zur Wärmezufuhr sind möglich, wie zum Beispiel Bestrahlung mit Infrarotstrahlen und/oder Mikrowellen.

Gemäß einer alternativen Ausführungsform kann auf die Wärmezufuhr bei der Montage der Befestigungsvorrichtung beziehungsweise vor dem Betrieb der Fahrzeugfelge an dem Fahrzeug jedoch verzichtet werden und der notwendige Wärmeeintrag zur Schrumpfung ausschließlich während des Betriebs der Felge in beziehungsweise an dem Fahrzeug erfolgen.

Eine Ausführungsform des erfindungsgemäßen Verfahrens sieht vor, dass der Spanngurt bei der Montage der Befestigungsvorrichtung bereits derart mit Wärme beaufschlagt wird, dass er einer endgültigen Schrumpfung unterliegt, das heißt dass spätere Schrumpfungen im Betrieb der Felge in beziehungsweise an dem Fahrzeug vermieden werden, selbst wenn hierbei ein Wärmeeintrag in den Spanngurt über die Felge erfolgt. Dies kann beispielsweise dadurch erreicht werden, dass der Spanngurt bei der Montage auf eine Temperatur erhitzt wird, die oberhalb der später im Betrieb der Felge auftretenden Temperaturen liegt. Zusätzlich oder alternativ kann für den Spanngurt ein Material gewählt werden, das bei einem Wärmeeintrag beziehungsweise bei Wärmezufuhr grundsätzlich nur einmal schrumpft und bei nachfolgenden Wärmeeinträgen nicht mehr schrumpfungsfähig ist.

Die Erfindung bietet den Vorteil, dass die Befestigungsvorrichtung beziehungsweise der bandförmige Spanngurt nur noch nach seinem Umschlingen um die Fahrzeugfelge durch die geeignete Wärmezufuhr sofort oder später auf die Felge aufgeschrumpft werden muss, ohne dass weitere Montageschritte erforderlich sind. Der Sensor kann dabei vor dem oder nach dem Aufschrumpfen am Spanngurt mittels der Aufnahmeeinrichtung befestigt werden, beispielsweise in eine durch die Aufnahmeeinrichtung gebildete Tasche eingesteckt werden, die aus demselben Material wie der Spanngurt hergestellt sein kann oder auch aus einem anderen Material. Wenn für die Tasche ein anderes Material als für den Spanngurt gewählt wird, kann diese insbesondere aus einem nicht schrumpfenden Material beziehungsweise einem bei der im Betrieb der Fahrzeugfelge auftretenden Temperatur nicht schrumpfenden Material hergestellt sein. Wenn auch die Tasche aus einem schrumpfenden und/oder aus einem elastischen Material hergestellt ist, so kann durch das Aufschrumpfen des Spanngurtes und/oder das Schrumpfen der Tasche der Messsensor sicher gegen Herausrutschen in der Tasche gehalten werden.

Besonders vorteilhaft ist der Spanngurt aus einem elastischen Material hergestellt, sodass er vor und insbesondere auch nach seiner Schrumpfung elastisch ist. Die Elastizität des Spanngurtes vor der Schrumpfung ermöglicht eine leichte Montage auf der Felge, beispielsweise, indem der Spanngurt durch elastisches Aufweiten über den Felgenrand hinweg in das Felgenbett gesetzt wird. Die gemäß einer Ausführungsform vorgesehene Elastizität nach dem Schrumpfen ermöglicht eine Kompensation von Durchmesseränderungen der Felge in deren Betrieb durch Wärmeausdehnung.

Insbesondere wenn der Spanngurt elastisch ist, kann er als Endlosband ausgeführt sein und damit ohne jeglichen Verschluss auskommen. Dadurch sind eine besonders kostengünstige Herstellung und eine besonders schnelle Montage möglich. Alternativ ist es jedoch auch möglich, den Spanngurt als Band mit zwei Enden auszuführen, die aneinander befestigt werden können, insbesondere durch einen entsprechenden ein- oder zweiteiligen Verschluss an einem oder beiden Enden. Prinzipiell ist es auch vorstellbar, den Spanngurt aus mehreren über dem Umfang hintereinander angeordneten Abschnitten zusammenzusetzen, die lösbar aneinander angeschlossen sind.

Der Spanngurt ist vorteilhaft aus einem textilen Material hergestellt, beispielsweise durch Weben oder Wirken. Es kommen dabei jedoch auch andere Herstellungsverfahren in Betracht, beispielsweise Stricken, Filzen oder anderes.

Der Spanngurt ist insbesondere aus einem Material hergestellt, das bei 150° C oder weniger schrumpft, insbesondere bei 120° oder weniger, besonders vorteilhaft bei 80° oder weniger. Die Schrumpfrate, das heißt die prozentuelle Längenverkürzung des Spanngurtes beträgt insbesondere 1 Prozent oder mehr, vorteilhaft 3 Prozent oder mehr, insbesondere bereits bei 80° C. Insbesondere beträgt die Schrumpfrate 5 Prozent oder mehr, vorteilhaft wenigstens 8 Prozent bei einer Schrumpfungstemperatur von 150° C. Es können ferner Materialien vorgesehen werden, die einer noch stärkeren Schrumpfung unterliegen.

Die Erfindung soll nachfolgend anhand eines Ausführungsbeispiels und den Figuren exemplarisch beschrieben werden.

Es zeigen:
- Figur 1: eine beispielhafte Ausgestaltung einer erfindungsgemäßen Befestigungsvorrichtung zum Befestigen eines Messsensors an einer Fahrzeugfelge;
- Figur 2: eine alternative erfindungsgemäße Ausgestaltung.

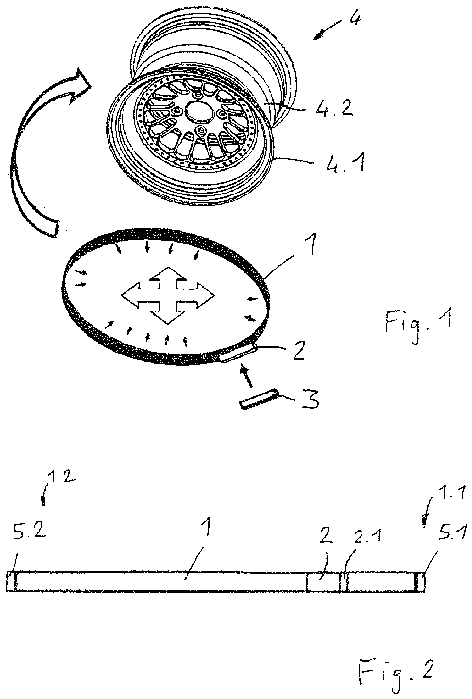

In der Figur 1 ist ein Spanngurt 1 aus einem unter Wärmezufuhr schrumpfenden Material dargestellt, der eine Aufnahmeeinrichtung 2 für einen Messsensor 3, beispielsweise in Form eines Reifendrucksensors und/oder Reifentemperatursensors, aufweist.

Der Spanngurt 1 ist insbesondere aus einem elastischen Material hergestellt, sodass er auseinander gezogen werden kann, um dadurch seine Länge und seinen Umfang zu vergrößern. Dies ist durch den Vierfachpfeil dargestellt. Die Elastizität ist jedoch nicht zwingend, wenn der Spanngurt 1, der hier als Endlosband ausgeführt ist, vor dem Aufbringen auf die dargestellte Felge 4, genauer über deren Felgenrand 4.1 hinweg in das Felgenbett 4.2 hinein, einen größeren Durchmesser als der Felgenrand 4.1 aufweist.

Der Spanngurt 1 wird zur Befestigung des Messsensors 3 an der Felge 4 beziehungsweise in deren Felgenbett 4.2 entsprechend von außen um die Felge 4 geschlungen und anschließend wird der Spanngurt 1 unter Wärmezufuhr geschrumpft. Dies ist durch die vielen kleinen Pfeile im Spanngurt 1 dargestellt. Durch die Wärmeschrumpfung wird die Länge des Spanngurtes 1 und damit der Durchmesser des Spanngurtesl reduziert, sodass sich der Spanngurt 1 eng von außen an die Felge 4 beziehungsweise an das Felgenbett 4.2 anlegt. Das Befestigen des Messsensors 3 in der Aufnahmeeinrichtung 2 kann dabei vor dem Umschlingen des Felge 4 mit dem Spanngurt 1 und/oder vor dem Schrumpfen des Spanngurtes 1 durch Wärmezufuhr erfolgen. Ferner ist es insbesondere möglich, einen in die Aufnahmeeinrichtung 2 eingebrachten oder daran befestigten Messsensor 3 gegen einen anderen Messsensor 3 auszutauschen, nachdem der Spanngurt 1 auf die Felge 4 aufgeschrumpft wurde.

In der Figur 2 ist eine alternative Ausgestaltung für einen Spanngurt 1 gezeigt. Hier ist der Spanngurt 1 nicht als Endlosband sondern als Band mit zwei Enden 1.1 und 1.2 ausgeführt, die aneinander befestigt werden können, beispielsweise mittels der beiden Verschlusshälften 5.1 und 5.2. Die Befestigung kann eine lösbare oder eine unlösbare sein. Verschiedene Ausgestaltungen sind möglich.

Im Übrigen gilt das zu der Ausgestaltung gemäß der Figur 1 Gesagte.

In der Figur 2 ist exemplarisch eine Aufnahmeeinrichtung 2 in Form einer Tasche mit einer Einschuböffnung 2.1 gezeigt. Diese Tasche ist beispielsweise aus demselben Material, insbesondere einem textilen Material, hergestellt, wie der Spanngurt 1. Eine solche Tasche könnte auch bei der Ausgestaltung gemäß der Figur 1 vorgesehen sein. Jegliche andere Ausgestaltungen sind jedoch möglich.

Wenn die Aufnahmeeinrichtung 2 als Tasche ausgeführt ist, kann diese durch Schrumpfen des Spanngurtes 1 oder durch Schrumpfen ihres eigenen Materials um den Messsensor 3 gespannt werden, sodass dieser unverlierbar in der Tasche 2 gehalten wird.

## Patentansprüche

1. Befestigungsvorrichtung zum Befestigen eines Messsensors (3), wie Reifendrucksensor innerhalb eines Reifenhohlraumes an einer Fahrzeugfelge, insbesondere Nutzkraftfahrzeugfelge, umfassend
1.1 einen bandförmigen Spanngurt (1), der eine Aufnahmeeinrichtung (2) für den Messsensor (3) trägt;
**dadurch gekennzeichnet, dass**
1.2 der Spanngurt (1) aus einem unter Wärmezufuhr schrumpfenden Material hergestellt ist, derart, dass sich der Spanngurt (1) unter Wärmezufuhr in seiner Länge bleibend verkürzt.

2. Befestigungsvorrichtung gemäß Anspruch 1, **dadurch gekennzeichnet, dass** der Spanngurt (1) als Endlosband ausgeführt ist.

3. Befestigungsvorrichtung gemäß Anspruch 1, **dadurch gekennzeichnet, dass** der Spanngurt (1) zwei entgegengesetzte aneinander anschließbare Enden (1.1, 1.2) aufweist.

4. Befestigungsvorrichtung gemäß einem der Ansprüche 1 bis 3, **dadurch gekennzeichnet, dass** der Spanngurt (1) aus einem textilen Material hergestellt ist.

5. Befestigungsvorrichtung gemäß Anspruch 4, **dadurch gekennzeichnet, dass** der Spanngurt (1) gewebt oder gewirkt ist.

6. Befestigungsvorrichtung gemäß einem der Ansprüche 1 bis 5, **dadurch gekennzeichnet, dass** der Spanngurt (1) zumindest vor einer Schrumpfung durch Wärmezufuhr elastisch ist.

7. Befestigungsvorrichtung gemäß Anspruch 6, **dadurch gekennzeichnet, dass** der Spanngurt (1) auch nach der Schrumpfung durch Wärmezufuhr elastisch ist.

8. Befestigungsvorrichtung gemäß einem der Ansprüche 1 bis 7, **dadurch gekennzeichnet, dass** der Spanngurt (1) aus einem Material hergestellt ist, das bei 150° C oder weniger, insbesondere bei 120° C oder 80° C oder weniger schrumpft.

9. Befestigungsvorrichtung gemäß Anspruch 8, **dadurch gekennzeichnet, dass** die Schrumpfrate des Spanngurtes (1) bei 150° C 1 Prozent oder mehr, insbesondere 5 Prozent oder mehr beträgt.

10. Befestigungsvorrichtung gemäß einem der Ansprüche 1 bis 9, **dadurch gekennzeichnet, dass** der Spanngurte (1) zumindest über seiner Breite, die senkrecht zu seiner Länge verläuft, einen homogenen Aufbau, insbesondere mit einer konstanten Dichte und/oder einem konstanten Flächengewicht aufweist.

11. Verfahren zum Montieren eines Messsensors (3), wie Reifendrucksensors innerhalb eines Reifenhohlraums an einer Fahrzeugfelge (4), insbesondere Nutzfahrzeugfelge, **gekennzeichnet durch** die folgenden Schritte:
11.1 Umschlingen der Fahrzeugfelge (4) mit einer Befestigungsvorrichtung gemäß einem der Ansprüche 1 bis 10;
11.2 anschließendes Schrumpfen des Spanngurtes (1) durch Wärmezufuhr, sodass sich der Spanngurt (1) in seiner Länge bleibend verkürzt.

12. Verfahren gemäß Anspruch 11, **dadurch gekennzeichnet, dass** der Spanngurt (1) durch Wärmezufuhr während des Betriebs der Fahrzeugfelge (4) an einem Fahrzeug geschrumpft wird.

13. Verfahren gemäß Anspruch 12, **dadurch gekennzeichnet, dass** der Spanngurt (1) ausschließlich durch Wärmezufuhr während des Betriebs der Fahrzeugfelge (4) an einem Fahrzeug geschrumpft wird.

14. Verfahren gemäß einem der Ansprüche 11 bis 13, **dadurch gekennzeichnet, dass** der Spanngurt (1) durch die Wärmezufuhr bleibend geschrumpft wird.

15. Verfahren gemäß einem der Ansprüche 11 bis 14, **dadurch gekennzeichnet, dass** der Spanngurt (1) nach seiner Montage auf der Fahrzeugfelge (4) vor einem Betrieb der Fahrzeugfelge (4) an einem Fahrzeug auf eine Temperatur gebracht wird, die eine Schrumpfung des Spanngurtes (1) auslöst und spätere Schrumpfungen verhindert.

## Claims

1. Fastening device for fastening a measurement sensor (3), such as a tyre pressure sensor, within a tyre cavity on a vehicle rim, in particular a commercial vehicle rim, comprising
1.1 a band-shaped tensioning strap (1) which carries a holding device (2) for the measurement sensor (3);
**characterized in that**
1.2 the tensioning strap (1) is made of a material that shrinks when heat is applied, such that the tensioning strap (1) permanently shortens in length when heat is applied.

2. Fastening device according to claim 1, **characterized in that** the tensioning strap (1) is configured as an endless band.

3. Fastening device according to claim 1, **characterized in that** the tensioning strap (1) has two opposite ends (1.1, 1.2) which can be connected to one another.

4. Fastening device according to one of claims 1 to 3, **characterized in that** the tensioning strap (1) is made of a textile material.

5. Fastening device according to claim 4, **characterized in that** the tensioning strap (1) is woven or knitted.

6. Fastening device according to one of claims 1 to 5, **characterized in that** the tensioning strap (1) is elastic at least prior to being shrunk by applying heat.

7. Fastening device according to claim 6, **characterized in that** the tensioning strap (1) is elastic even after being shrunk by applying heat.

8. Fastening device according to one of claims 1 to 7, **characterized in that** the tensioning strap (1) is made of a material that shrinks at 150°C or less, in particular at 120°C or 80°C or less.

9. Fastening device according to claim 8, **characterized in that** the shrinkage rate of the tensioning strap (1) at 150°C is 1% or more, in particular 5% or more.

10. Fastening device according to one of claims 1 to 9, **characterized in that** the tensioning strap (1), at least over its width, which runs perpendicular to its length, has a homogeneous structure, in particular with a constant density and/or a constant weight per unit area.

11. Method for installing a measurement sensor (3), such as a tyre pressure sensor, within a tyre cavity on a vehicle rim (4), in particular a commercial vehicle rim, **characterized by** the following steps:
11.1 wrapping a fastening device according to one of claims 1 to 10 around the vehicle rim (4);
11.2 then shrinking the tensioning strap (1) by applying heat, such that the tensioning strap (1) permanently shortens in length.

12. Method according to claim 11, **characterized in that** the tensioning strap (1) is shrunk by applying heat during operation of the vehicle rim (4) on a vehicle.

13. Method according to claim 12, **characterized in that** the tensioning strap (1) is shrunk exclusively by applying heat during operation of the vehicle rim (4) on a vehicle.

14. Method according to one of claims 11 to 13, **characterized in that** the tensioning strap (1) is permanently shrunk by applying heat.

15. Method according to one of claims 11 to 14, **characterized in that** the tensioning strap (1), after being installed on the vehicle rim (4) prior to operation of the vehicle rim (4) on a vehicle, is brought to a temperature that triggers a shrinkage of the tensioning strap (1) and prevents subsequent shrinkages.

## Revendications

1. Dispositif de fixation pour fixer un capteur de mesure (3), tel qu'un capteur de pression de pneu, à l'intérieur d'une cavité de pneu sur une jante de véhicule, en particulier une jante de véhicule utilitaire, comprenant
1.1 une sangle de serrage en forme de bande (1) qui porte un moyen de réception (2) pour le capteur de mesure (3) ;
**caractérisé en ce que**
1.2 la sangle de serrage (1) est constituée d'un matériau qui se rétracte sous apport de chaleur, de telle sorte que la longueur de la sangle de serrage (1) est permanent raccourcie sous apport de chaleur.

2. Dispositif de fixation selon la revendication 1, **caractérisé en ce que** la sangle de serrage (1) est réalisée sous la forme d'une bande sans fin.

3. Dispositif de fixation selon la revendication 1, **caractérisé en ce que** la sangle de serrage (1) présente deux extrémités opposées (1.1, 1.2) qui peuvent être reliées entre elles.

4. Dispositif de fixation selon l'une des revendications 1 à 3, **caractérisé en ce que** la sangle de serrage (1) est constituée d'un matériau textile.

5. Dispositif de fixation selon la revendication 4, **caractérisé en ce que** la sangle de serrage (1) est tissée ou tricotée.

6. Dispositif de fixation selon l'une des revendications 1 à 5, **caractérisé en ce que** la sangle de serrage (1) est élastique au moins avant une rétraction par apport de chaleur.

7. Dispositif de fixation selon la revendication 6, **caractérisé en ce que** la sangle de serrage (1) est élastique même après la rétraction par apport de chaleur.

8. Dispositif de fixation selon l'une des revendications 1 à 7, **caractérisé en ce que** la sangle de serrage (1) est constituée d'un matériau qui se rétracte à 150 °C ou moins, en particulier à 120 °C ou 80 °C ou moins.

9. Dispositif de fixation selon la revendication 8, **caractérisé en ce que** le taux de rétraction de la sangle de serrage (1) à 150 °C est de 1 pour cent ou plus, en particulier de 5 pour cent ou plus.

10. Dispositif de fixation selon l'une des revendications 1 à 9, **caractérisé en ce que** la sangle de serrage (1) présente une structure homogène au moins sur sa largeur, qui s'étend perpendiculairement à sa longueur, en particulier avec une densité constante et/ou une masse surfacique constante.

11. Procédé de montage d'un capteur de mesure (3), tel qu'un capteur de pression de pneu, dans une cavité de pneu sur une jante de véhicule (4), en particulier une jante de véhicule utilitaire, **caractérisé par** les étapes suivantes :
11.1 enlacement de la jante de véhicule (4) avec un dispositif de fixation selon l'une des revendications 1 à 10 ;
11.2 rétraction subséquente de la sangle de serrage (1) par apport de chaleur, de sorte que la longueur de la sangle de serrage (1) est permanent raccourcie.

12. Procédé selon la revendication 11, **caractérisé en ce que** la sangle de serrage (1) est rétractée par apport de chaleur pendant le fonctionnement de la jante de véhicule (4) sur un véhicule.

13. Procédé selon la revendication 12, **caractérisé en ce que** la sangle de serrage (1) est rétractée par apport de chaleur uniquement pendant le fonctionnement de la jante de véhicule (4) sur un véhicule.

14. Procédé selon l'une des revendications 11 à 13, **caractérisé en ce que** la sangle de serrage (1) est rétractée de façon permanente par l'apport de chaleur.

15. Procédé selon l'une des revendications 11 à 14, **caractérisé en ce qu'**après avoir été montée sur la jante de véhicule (4), avant un fonctionnement de la jante de véhicule (4) sur un véhicule, la sangle de serrage (1) est amenée à une température qui déclenche une rétraction de la sangle de serrage (1) et empêche des rétractions ultérieures.
